# EUROPEAN PATENT APPLICATION

(11) **EP 1 760 940 A1**
(43) Date of publication of application: **07.03.2007**
(21) Application number: 06741974.7
(22) Date of filing: 24.05.2006
(51) Int. Cl.: H04L 12/26

(54) **A METHOD AND SYSTEM FOR DETERMINING CHANNEL PERFORMANCE**

(30) Priority: 26.05.2005 CN 200510072149
(71) Applicant: Huawei Technologies Co., Ltd., Longgang District Shenzhen Guangdong 518129 (CN)
(72) Inventor: ZHOU, Jun, Huawei Administration Bld., 518129 Shenzhen Guangdong (CN)
(74) Representative: Skuhra, Udo
(86) International application number: PCT/CN2006/001086
(87) International publication number: WO 2006/125393

(57) **Abstract**

The present invention discloses a method and system for determining channel characters, which is to be applied in various Digital Subscriber Line (xDSL) networks. A Central Office device acquires parameters of an uplink channel according to uplink signals transmitted in the uplink channel, and a customer premise equipment (CPE) acquires parameters of a downlink channel according to downlink signals transmitted in the downlink channel; characters of the channel is determined based on the parameters of the uplink channel acquired by the Central Office device and the parameters of the downlink channel acquired by the CPE. The present invention can acquire complete characteristics of lines, which guarantees determining channel characters exactly.

## Description

### Field of the Technology

The present invention relates to network communication technologies, and particularly, to a method and system for determining the channel characters in Digital Subscriber Line (xDSL) networks.

### Background of the Invention

xDSL networks include Asymmetric Digital Subscriber Line (ADSL) networks, the second generation Asymmetric Digital Subscriber Line (ADSL2) networks, Very High Data Rate Digital Subscriber Line (VDSL) networks, the second generation Very High Data Rate Digital Subscriber Line (VDSL2) networks etc. With the development of xDSL technologies, maintenances of xDSL networks have become very important. In the maintenances of xDSL networks, an important maintenance is the maintenance of xDSL lines, that is, determining characters of each channel such as availability of channel, line lengths, bridge taps, cross talk model and reasons for unavailability of channel, in an xDSL network.

In the testing of xDSL lines, that is, determining characters of each channel, a special test instrument can be used. Such test instrument can be fixed at the side of the Central Office (CO), for example, the instrument is fixed together with a DSL access multiplexer(DSLAM), or the instrument is a portable instrument. Specifically, there are two kinds of test method, that is, the single-ended test and the dual-ended test.

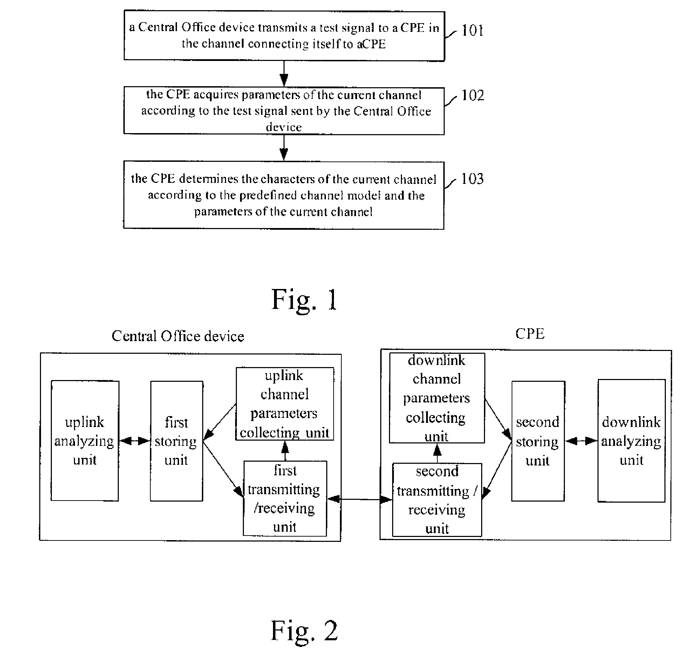

When the dual-ended test method is adopted to determine the channel characters in an xDSL network, cooperation between devices at the side of the Central Office and the customer premise equipment (CPE) is needed. Fig. is a flow chart illustrating determining channel characters in an xDSL network in the prior art. As shown in Fig. 1, in the prior art, the procedure of determining the channel characters using the dual-ended test method in an xDSL network, includes the steps of:
Step 101: a Central Office device transmits a test signal to a CPE on a channel connecting the Central Office device and the CPE.
Step 102: after receiving the test signal sent by the Central Office device, the CPE acquires parameters of the current channel through analysis.
Step 103: the CPE determines the characters of the current channel according to the predefined channel model and the acquired parameters of the current channel.
As can be seen from the above description, in the case of the dual-ended test method being adopted to determine channel characters in an xDSL network in the prior art, the channel characters are determined by the CPE, that is, a terminal, only according to the test signal sent by the Central Office device in the downlink direction. Therefore, only characters of downlink channels can be determined in the prior art. However, in practical services, a Frequency Division Multiplexing method is used in xDSL networks such as an ADSL network and a VDSL network, that is, downlink signals sent by a Central Office device and uplink signals sent by a CPE use different frequency bands respectively. For example, a frequency spectrum of a VDSL is that, uplink frequency bands are 3.75~5.2 MHz and 8.5~12 MHz, downlink frequency bands are 0.138~3.75 MHz and 5.2~8.5 MHz. Thus, if the method for determining channel characters in the prior art, that is, only received downlink signals of the downlink frequency bands are used to determine the characters of the current channel without taking uplink signals of the uplink frequency bands into consideration, is adopted, there must be a problem that the downlink signals cannot represent line characteristics fully. Accordingly, the determined channel characters are not exact.

### Summary of the Invention

The present invention is to set forth a method for determining channel characters, and another objective of the present invention is to set forth a system for determining the characters of the channels, so as to determine the channel characters exactly.

A method for determining characters of a communication channel applied in various Digital Subscriber Line (xDSL) networks includes the following steps:
a Central Office device acquires parameters of an uplink channel according to uplink signals transmitted in the uplink channel; and a CPE acquires parameters of a downlink channel according to downlink signals transmitted in the downlink channel;
the characters of the channel between the Central Office device and the CPE are determined according to the parameters of the uplink channel acquired by the Central Office device and the parameters of the downlink channel acquired by the CPE.

The step of acquiring parameters of the uplink channel by a Central Office device according to the uplink signals transmitted in the uplink channel includes the following steps: the CPE transmits a test signal in the uplink channel; after the Central Office device receives the test signal in the uplink channel, the Central Office device acquires the parameters of the uplink channel according to the test signal.

The step of acquiring parameters of the downlink channel by a CPE according to the downlink signals transmitted in the downlink channel includes the following steps: the Central Office device transmits a test signal in the downlink channel; after the CPE receives the test signal in the downlink channel, the Central Office device acquires the parameters of the downlink channel according to the test signal.

The determining step includes the following steps: the Central Office device determines the uplink channel characters based on the acquired parameters of the uplink channel and a predefined channel model; the CPE determines the downlink channel characters based on the acquired parameters of the downlink channel and the predefined channel model; the channel characters between the Central Office device and the CPE is determined based on the uplink channel characters and the downlink channel characters.

The step of determining channel characters based on the uplink channel characters and the downlink channel characters includes the following steps: the Central Office device transmits the uplink channel characters to the CPE; the CPE determines the channel characters based on the uplink channel characters and the downlink channel characters.

The step of determining the channel characters based on the uplink channel characters and the downlink channel characters includes the following steps: the CPE transmits the downlink channel characters to the Central Office device; the Central Office device determines the channel characters based on the downlink channel characters from the CPE and the uplink channel characters.

The determining step includes the following steps: the Central Office device transmits the acquired parameters of the uplink channel to the CPE; the CPE determines the channel characters based on the received parameters of the uplink channel, the acquired parameters of the downlink channel and the predefined channel model.

The determining step includes the following steps: the CPE transmits the acquired parameters of the downlink channel to the Central Office device; the Central Office device determines the channel characters based on the received parameters of the downlink channel, the acquired parameters of the uplink channel and the predefined channel model.

In the case of a CPE not supporting a dual-ended test procedure, the CPE carries out the transmitting step by a terminal administration channel.

Between the acquiring step and the determining step, the method further includes the following steps: the acquired parameters of the uplink channel and parameters of the downlink channel are compensated according to the preferred values of the known arts;
in the determining step, the parameters of the uplink channel and downlink channel are the compensated parameters.

Between the acquiring step and the determining step, the method further includes the following steps: the transmitter/receiver parameters of the Central Office device are deducted from the acquired parameters of the uplink channel and the transmitter/receiver parameters of the Remote device are deducted from the acquired parameters of the downlink channel;
in the determining step, the parameters of the uplink channel and parameters of the downlink channel are the parameters of the uplink channel and parameters of the downlink channel from which the transmitter/receiver parameters are deducted.

The characters of a channel include at least one of the following items: interference location information, channel length, channel quality evaluation, bridge taps identification, load coils, traffic performances;
the parameters of a channel include at least one of the following items: transfer function, channel attenuation, background noise, Signal-to-Noise ratio, channel transmission delay, and channel reflection points.

A system for determining characters of channels, includes
a Central Office device used for acquiring parameters of an uplink channel;
a CPE used for acquiring parameters of a downlink channel;
an analyzing unit used for determining characters of a channel according to the parameters of the uplink channel acquired by the Central Office device and the parameters of the downlink channel acquired by the CPE.

The Central Office device includes the first transmitting/receiving unit and a uplink channel parameters collecting unit, and the CPE includes the second transmitting/receiving unit and a downlink channel parameters collecting unit;
the first transmitting/receiving unit is used for transmitting a test signal in the downlink channel, and receiving a test signal in the uplink channel and transmitting the received test signal to the uplink channel parameters collecting unit upon performing A/D transform to the received test signal;
the uplink channel parameters collecting unit is used for acquiring parameters of the uplink channel from the received A/D transformed signal;
the second transmitting/receiving unit is used for transmitting a test signal on the uplink channel, and receiving a test signal in the downlink channel and transmitting the received test signal to the downlink channel parameters collecting unit upon performing A/D transform to the received test signal;
the downlink channel parameters collecting unit is used for acquiring parameters of the downlink channel from the received A/D transformed signal.

The analyzing unit includes: an uplink analyzing unit located in the Central Office, and a downlink analyzing unit located in the CPE;
the uplink analyzing unit is used for determining characters of the uplink channel based on the parameters of the uplink channel acquired by the uplink channel parameters collecting unit and a predefined channel model;
the downlink analyzing unit is used for determining characters of the downlink channel based on the parameters of the downlink channel acquired by the downlink channel parameters collecting unit and the predefined channel model;
and, the uplink analyzing unit transmits the determined information of the characters of the uplink channel to the downlink analyzing unit by the first transmitting/receiving unit and the second transmitting/receiving unit, then, the downlink analyzing unit determines characters of the channel between the Central Office device and the CPE according to the received characters of the uplink channel, the determined characters of the downlink channel and the predefined channel model; or, the downlink analyzing unit transmits the determined information of the characters of the downlink channel to the uplink analyzing unit by the second transmitting/receiving unit and the first transmitting/receiving unit, then, the uplink analyzing unit determines characters of the channel between the Central Office device and the CPE according to the received characters of the downlink channel, the determined characters of the uplink channel and the predefined channel model.

The analyzing unit is located in the Central Office device,
the second transmitting/receiving unit is used for transmitting the parameters of the downlink channel acquired by the downlink channel parameters collecting unit to the first transmitting/receiving unit;
the first transmitting/receiving unit is used for transmitting the received parameters of the downlink channel to the analyzing unit;
the analyzing unit is used for determining the characters of the channel between the Central Office device and the CPE based on the parameters of the uplink channel acquired by the uplink channel parameters collecting unit, the received parameters of the downlink channel and the predefined channel model.

The analyzing unit is located in the CPE,
the first transmitting/receiving unit is used for transmitting the parameters of the uplink channel acquired by the uplink channel parameters collecting unit to the second transmitting/receiving unit;
the second transmitting/receiving unit is used for transmitting the received parameters of the uplink channel to the analyzing unit;
the analyzing unit is used for determining the characters of the channel between the Central Office device and the CPE based on the parameters of the downlink channel acquired by the downlink channel parameters collecting unit, the received parameters of the uplink channel and the predefined channel model.

The Central Office device and the CPE further include a first storing unit and a second storing unit, respectively; the analyzing unit performs the interaction procedure with the first transmitting/receiving unit, the second transmitting/receiving unit and the channel parameters collecting units through the storing unit.

As can be seen from the above, in the present invention, not only a CPE, that is, a terminal, determines the parameters of a downlink channel according to a test signal sent by a Central Office device in the downlink direction, but also the Central Office device determines the parameters of an uplink channel according to a test signal sent by a CPE in the uplink direction. Then, the characters of the current channel are determined by synthesizing the parameters of the uplink channel and the parameters of the downlink channel. Therefore, the present invention can acquire complete characteristics of lines, which guarantees determining channel characters exactly.

### Brief Description of the Drawings

Fig.1 is a flow chart illustrating determining characters of channels in an xDSL network in the prior art;
Fig.2 is a schematic diagram illustrating the first specific structure of a system in accordance with present invention;
Fig.3 is a schematic diagram illustrating the second specific structure of a system in accordance with the present invention;
Fig.4 is a schematic diagram illustrating the third specific structure of a system in accordance with the present invention;
Fig. 5 is a flow chart of an embodiment of the present invention.

### Embodiments of the Invention

In the prior art, channel characters are determined by only analyzing downlink signals without taking uplink signals into consideration, therefore, channel characters cannot be represented fully, resulting in the inexact determined channel characters. Aiming at this disadvantage, the present invention proposes a method for determining channel characters: parameters of an uplink channel are acquired according to uplink signals transmitted in the uplink channel, and parameters of a downlink channel are acquired according to downlink signals transmitted in the downlink channel; the characters of the channel between the downlink channel and the uplink channel are determined according to the acquired parameters of the uplink channel and parameters of the downlink channel.

Comespondingly, the present invention also proposes a system for determining channel characters, including: a Central Office device, a CPE and an analyzing unit, wherein, the Central Office device is used for acquiring parameters of an uplink channel; the CPE is used for acquiring parameters of a downlink channel; the analyzing unit is used for determining the characters of the channel according to the parameters of the uplink channel acquired by the Central Office device and the parameters of the downlink channel acquired by the CPE.

Specifically, in a system in accordance with the present invention, a Central Office device includes the first transmitting/receiving unit and an uplink channel parameters collecting unit, and a CPE includes the second transmitting/receiving unit and a downlink channel parameters collecting unit. Furthermore, the Central Office device and the CPE further include a storing unit and the second storing unit respectively.

Fig.2 is a schematic diagram illustrating the first specific structure of a system in accordance with the present invention. As shown in Fig.2, specifically, the analyzing unit in a system in accordance with the can be divided into an uplink analyzing unit located in the Central Office device and a downlink analyzing unit located in the CPE. Under the circumstance, in the Central Office device, the first storing unit is connected directly with the uplink channel parameters collecting unit, the first transmitting/receiving unit and the uplink analyzing unit, respectively. While in the CPE, the second storing unit is connected directly with the downlink channel parameters collecting unit, the second transmitting/receiving unit and the downlink analyzing unit, respectively.

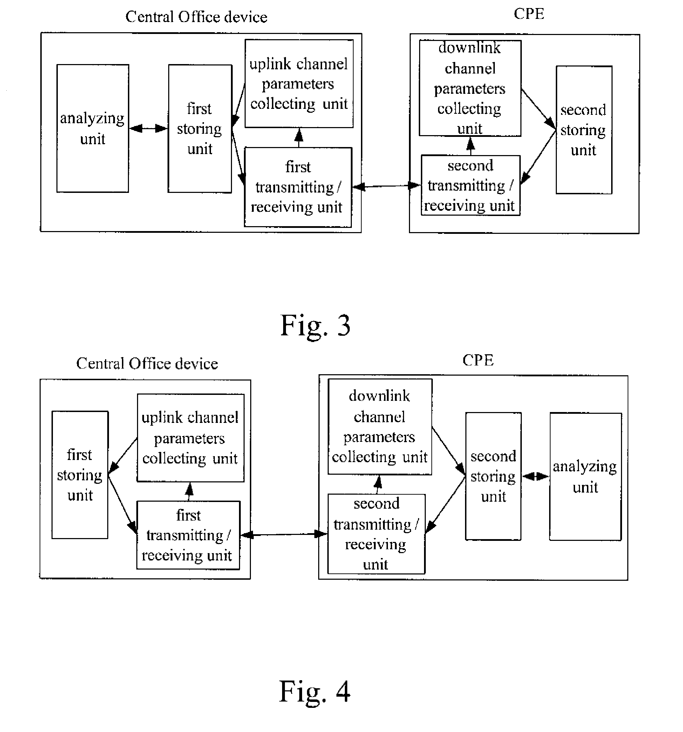

Fig.3 is a schematic diagram illustrating the second specific structure of a system in accordance with the present invention. As shown in Fig.3, the analyzing unit can be located in the Central Office device in a system in accordance with the. Under the circumstance, in the Central Office device, the first storing unit is connected directly with the uplink channel parameters collecting unit, the first transmitting/receiving unit and the analyzing unit, respectively. While in the CPE, the second storing unit is connected directly with the downlink channel parameters collecting unit and the second transmitting/receiving unit, respectively.

Fig. 4 is a schematic diagram illustrating the third specific structure of a system in accordance with the present invention. As shown in Fig. 4, the analyzing unit can be located in the CPE in a system in accordance with the present invention. Under the circumstance, in the Central Office device, the first storing unit is connected directly with the uplink channel parameters collecting unit and the first transmitting/receiving unit, respectively. While in the CPE, the second storing unit is connected directly with the downlink channel parameters collecting unit, the second transmitting/receiving unit and the analyzing unit, respectively.

The present invention is hereinafter described in detail in conjunction with the drawings for a further understanding of the present invention.

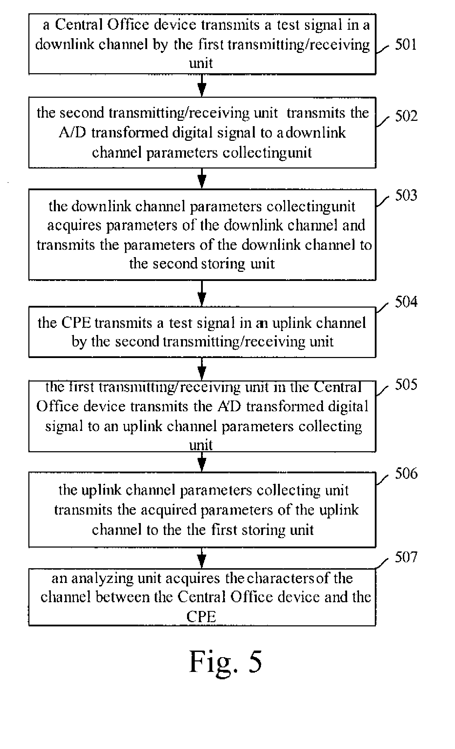

Fig. 5 is a flow chart of an embodiment of the present invention. As shown in Fig.2 to Fig. 5, a procedure for determining characters of a channel in an xDSL network includes the steps of:
Step 501: a Central Office device transmits a test signal in a downlink channel by the first transmitting/receiving unit.
Step 502: after receiving the test signal on the downlink channel, the second transmitting/receiving unit of the CPE transforms the received test signal into a digital signal with which the CPE can deal via an A/D transformation, then transmits the A/D transformed digital signal to a downlink channel parameters collecting unit in the CPE.
Herein, after receiving the test signal on the downlink channel, the second transmitting/receiving unit can also perform other related service processing such as signal amplifying processing to the test signal.
Step 503: the downlink channel parameters collecting unit acquires parameters of the downlink channel from the received digital signal, and transmits the acquired parameters of the downlink channel to the second storing unit.
Herein, the parameters of the downlink channel acquired by the downlink channel parameters collecting unit can include: the transfer function of the downlink channel, the attenuation of the downlink channel, the background noise of the downlink channel, the Signal-to-Noise ratio of the downlink channel, the transmission delay of the downlink channel and the reflection points of the downlink channel etc.
Step 504: the CPE transmits a test signal in an uplink channel by the second transmitting/receiving unit.
Step 505: after receiving the test signal on the uplink channel, the first transmitting/receiving unit of the Central Office device transforms the received test signal into a digital signal with which the CPE can deal via an A/D transformation, then transmits the A/D transformed digital signal to an uplink channel parameters collecting unit in the Central Office device.
Herein, after receiving the test signal on the uplink channel, the first transmitting/receiving unit can also perform other related service processing such as signal amplifying processing to the test signal.
In the above Step 502 and Step 505, if the transmitting/receiving unit sets a transmitter/receiver parameter model in itself, after receiving the downlink/uplink signals, and before performing the processing such as the A/D transformation, the transmitting/receiving unit can also perform a processing of deducting influence of itself to the received downlink/uplink signals, so as to further guarantee the determined characters of the channel to be exact. This is because the transmitter/receiver parameters of the transmitting/receiving unit such as pass band response and transition band response, and gain of filter will be loaded together with the parameters of channels in the received downlink/uplink signals when the transmitting/receiving unit is receiving the downlink/uplink signals. Therefore, the transmitting/receiving unit further deducts its own transmitter/receiver parameters from the received downlink/uplink signals, so as to acquire each parameter of the downlink channel exactly.
Step 506: the uplink channel parameters collecting unit acquires parameters of the uplink channel from the received digital signals, and transmits the acquired parameters of the uplink channel to the first storing unit.
Herein, the parameters of the uplink channel acquired by the uplink channel parameters collecting unit in the Central Office device can include: the transfer function of the uplink channel, the attenuation of the uplink channel, the background noise of the uplink channel, the Signal-to-Noise ratio of the uplink channel, the transmission delay of the uplink channel and the reflection points of the uplink channel.
It should be noted that there is no settled execution sequence of the above Step 501 to Step 503 and the Step 504 to Step 506, and they can be performed at the same time.
Also, the procedure of the above Step 501 to Step 506 is applicable to one of systems shown in Fig.2, Fig.3 and Fig.4.
Step 507: an analyzing unit acquires the characters of the channel between the Central Office device and the CPE by synthesizing the parameters of the uplink channel in the first storing unit, the parameters of the downlink channel in the second storing unit and the predefined channel model.

As shown in Fig.2, in a system in accordance with the present invention, the specific procedure for implementing Step 507 includes: A00. in the Central Office device, the uplink analyzing unit acquires the parameters of the uplink channel from the first storing unit, then determines the characters of the uplink channel according to the predefined channel model stored in itself in advance and the acquired parameters of the uplink channel; A01. in the CPE, the downlink analyzing unit acquires the parameters of the downlink channel from the second storing unit, then determines the characters of the downlink channel according to predefined channel model stored in itself in advance and the acquired parameters of the downlink channel; A03. the characters of the channel between the Central Office device and the CPE are determined by synthesizing the characters of the uplink channel and the characters of the downlink channel determined by the uplink analyzing unit and the downlink analyzing unit respectively.

The characters of the channel can be determined synthetically by the downlink analyzing unit in step A03, and the specific implementation is that: the uplink analyzing unit transmits the characters information of the uplink channel to the first storing unit; the first transmitting/receiving unit acquires the character information of the uplink channel from the first storing unit, then transmits the acquired character information of the uplink channel to the second transmitting/receiving unit; in the CPE, the transmitting/receiving unit transmits the received character information of the uplink channel to the second storing unit; the downlink analyzing unit acquires the character information of the uplink channel from the second storing unit in the CPE; the downlink analyzing unit determines the characters of the channel between the Central Office device and the CPE over the whole frequency band by synthesizing the acquired character information of the uplink channel and the character information of the downlink channel.

The characters of the channel can also be determined synthetically by the uplink analyzing unit in step A03, and the specific implementation is that: in the CPE, the downlink analyzing unit transmits the determined character information of the downlink channel to the second storing unit; the second transmitting/receiving unit acquires the character information of the downlink channel from the second storing unit, then transmits the acquired character infonnation of the downlink channel to the first transmitting/receiving unit; in the Central Office device, the first transmitting/receiving unit transmits the received character information of the downlink channel to the first storing unit; in the Central Office device, the uplink analyzing unit acquires the character information of the downlink channel from the first storing unit; the uplink analyzing unit determines the characters of the channel between the Central Office device and the CPE over the whole frequency band by synthesizing the acquired character information of the uplink channel and the character information of the downlink channel.

As shown in Fig.3, in a system in accordance with the present invention, the specific procedure for implementing Step 507 includes: in the CPE, the second transmitting/receiving unit acquires the parameters of the downlink channel from the second storing unit, then transmits the acquired parameters of the downlink channel to the first transmitting/receiving unit; in the Central Office device, the first transmitting/receiving unit transmits the received parameters of the downlink channel to the first storing unit; in the Central Office device, the analyzing unit acquires the parameters of the uplink channel and the parameters of the downlink channel from the first storing unit; the analyzing unit in the Central Office device determines the characters of the uplink channel according to predefined channel model stored in itself in advance and the parameters of the uplink channel, and determines the characters of the downlink channel according to the predefined channel model stored in itself in advance and the parameters of the downlink channel; the analyzing unit in the Central Office device determines the characters of the channel between itself and the CPE over the whole frequency band by synthesizing the acquired characters of the uplink channel and the characters of the downlink channel.

As shown in Fig.4, in a system in accordance with the present invention , the specific procedure for implementing Step 507 includes: in the Central Office device, the first transmitting/receiving unit acquires the parameters of the uplink channel from the first storing unit, then transmits the acquired parameters of the uplink channel to the second transmitting/receiving unit in the CPE; in the CPE, the second transmitting/receiving unit transmits the received parameters of the uplink channel to the second storing unit; in the CPE, the analyzing unit acquires the parameters of the uplink channel and the parameters of the downlink channel from the second storing unit; the analyzing unit in the CPE determines the characters of the uplink channel according to the predefined channel model stored in itself in advance and the parameters of the uplink channel, and determines the characters of the downlink channel according to the predefined channel model stored in itself in advance and the parameters of the downlink channel; the analyzing unit in the Central Office device determines the characters of the channel between itself and the CPE over the whole frequency band by synthesizing the acquired characters of the uplink channel and the characters of the downlink channel.

It should be noted that, in step 507, if the CPE, i.e., a terminal, does not support the dual-ended test procedure, that is, the CPE cannot transmit the parameters of the downlink channel or the character information of the downlink channel to the Central Office device by the ordinary uplink channel, the CPE can transmit the parameters of the downlink channel or the character information of the downlink channel to the Central Office device by an upper layer such as a terminal administration channel.

In step 507, examples of the procedure for acquiring the characters of the channel between the Central Office device and the CPE by synthesizing the determined characters of the uplink channel and characters of the downlink channel can be as follows. If an uplink frequency band accords with the theoretic values well in a character of an uplink channel, and the downlink attenuation is on the bigger side in the characters of the downlink channel in an ADSL2+ network, it can be concluded synthetically that the high frequency characteristic of the channel is poor and the reason maybe is the aging of lines. In another example, a background noise of a Central Office device and a background noise of a CPE can be measured by testing a background noise, then the frequency spectrum shape of the background noise is compared with crosstalk frequency spectrum shapes of corresponding services, which can be a Integrated Service Digital Network (ISDN) service, a Symmetric Digital Subscriber Line (SHDSL) service, an ADSL service and a VDSL service. If a matched crosstalk frequency spectrum of a service is found, the background noise is induced by the crosstalk of the service. Afterwards, by comparing the noise spectrum of the Central Office device with the noise spectrum of the CPE, it can be determined whether the crosstalk source is near the Central Office device or near the CPE. Furthermore, if the background noise spectrum is even approximately and has only some spikes, it must be a white noise.

In step 507, the parameters of the uplink channel and the parameters of the downlink channel can be further corrected; then, the characters of the uplink channel and the characters of the downlink channel can be determined by the corrected parameters of the uplink channel and the parameters of the downlink channel. For example, channel gain in parameters of an uplink channel can be measured to be bigger than 1 when a line is very short. This does not accord with conditions of practical services at all because what is represented by a practical line should be attenuation, that is, the gain should be less than 1. Therefore, it can be determined that, this is induced by a transmitter/receiver gain which is not deducted when the characters of the channel is determined. Accordingly, the gain of the transmitter/receiver in the Central Office device is deducted from the parameters of the uplink channel, and then the characters of the uplink channel is determined using the corrected parameters of the uplink channel.

In the present invention, if there is not a storing unit in both a Central Office device and a CPE, the analyzing unit performs the interaction procedure directly with channel parameters collecting units and transmitting/receiving units.

In the present invention, a predefined channel model is given in industry standards, or can be given by existing large numbers of test data and preferred parameters of the known arts. Specifically, it can include: a capacitor, a resistor, an inductor, frequency response, longitudinal balance, defence degree for crosstalk, an electromagnetic wave transmission rate in a line and a reflectance of a standard line. In the present invent, the determined characters of a channel can include: interference identification, channel length, line specification, channel quality evaluation, bridge taps identification, loading coils, whether a separator is connected and traffic performances etc.

In the present invention, the determined characters of a channel include at least one of the following items: interference identification, channel length, channel quality evaluation, bridge taps identification, loading coils, traffic performances etc.

The procedure for determining characters of a channel in accordance with the present invention can be implemented in a dual-ended test procedure between a Central Office device and a CPE, or can also be implemented in a normal initialization procedure between a Central Office device and a CPE.

The foregoing descriptions are only preferred embodiments of the present invention and are not for use in limiting the protection scope thereof. Any modification, equivalent replacement or improvement made under the spirit and principles of the present invention is included in the scope of the claims of the present invention.

## Claims

1. A method for determining characters of a communication channel applied in various Digital Subscriber Line (xDSL) networks, comprising:
acquiring parameters of an uplink channel by a Central Office device according to uplink signals transmitted in the uplink channel;
acquiring parameters of a downlink channel by a customer premise equipment (CPE) according to downlink signals transmitted in the downlink channel;
determining characters of the channel between the Central Office device and the CPE according to the parameters of the uplink channel acquired by the Central Office device and the parameters of the downlink channel acquired by the CPE.

2. The method according to Claim 1, wherein the step of acquiring parameters of the uplink channel by a Central Office device according to the uplink signals transmitted in the uplink channel comprises:
transmitting a test signal in the uplink channel by the CPE;
upon receiving the test signal in the uplink channel, acquiring the parameters of the uplink channel according to the test signal by the Central Office device.

3. The method according to Claim 1, wherein the step of acquiring parameters of the downlink channel by a CPE according to the downlink signals transmitted in the downlink channel comprises:
transmitting a test signal in the downlink channel by the Central Office device;
upon receiving the test signal in the downlink channel, acquiring the parameters of the downlink channel according to the test signal by the CPE.

4. The method according to Claim 1, wherein the determining step comprises:
determining the uplink channel characters by the Central Office device based on the acquired parameters of the uplink channel and a predefined channel model;
determining the downlink channel characters by the CPE based on the acquired parameters of the downlink channel and the predefined channel model;
determining the channel characters between the Central Office device and the CPE based on the uplink channel characters and the downlink channel characters.

5. The method according to Claim 4, wherein the step of determining channel characters based on the uplink channel characters and the downlink channel characters comprises:
transmitting the uplink channel characters to the CPE by the Central Office device;
determining the channel characters by the CPE based on the uplink channel characters and the downlink channel characters.

6. The method according to Claim 4, wherein the step of determining the channel characters based on the uplink channel characters and the downlink channel characters comprises:
transmitting the downlink channel characters to the Central Office device by the CPE;
determining the channel characters based on the downlink channel characters from the CPE and the uplink channel characters, by the Central Office device.

7. The method according to Claim 1, wherein the determining step comprises: transmitting the acquired parameters of the uplink channel to the CPE by the Central Office device;
determining the channel characters based on the received parameters of the uplink channel, the acquired parameters of the downlink channel and the predefined channel model by the CPE.

8. The method according to Claim 1, wherein the determining step comprises: transmitting the acquired parameters of the downlink channel to the Central Office device by the CPE;
determining the channel characters based on the received parameters of the downlink channel, the acquired parameters of the uplink channel and the predefined channel model, by the Central Office device.

9. The method according to Claim 6 or Claim 8, wherein in the case of a CPE not supporting a dual-ended test procedure, the CPE carries out the transmitting step by a terminal administration channel.

10. The method according to Claim 1, between the acquiring step and the determining step, further comprising: compensating the acquired parameters of the uplink channel and parameters of the downlink channel according to the preferred values of the known arts;
wherein, in the determining step, the parameters of the uplink channel and downlink channel are the compensated parameters.

11. The method according to Claim 1, between the acquiring step and the determining step, further comprising: deducting transmitter/receiver parameters of the Central Office device from the acquired parameters of the uplink channel and deducting transmitter/receiver parameters of the Remote device from the acquired parameters of the downlink channel;
wherein, in the determining step, the parameters of the uplink channel and parameters of the downlink channel are the parameters of the uplink channel and parameters of the downlink channel from which the transmitter/receiver parameters are deducted.

12. The method according to Claim 1, wherein the characters of a channel comprise at least one of the following items: interference location information, channel length, channel quality evaluation, bridge taps identification, load coils, traffic performances;
wherein the parameters of a channel comprise at least one of the following items: transfer function, channel attenuation, background noise, Signal-to-Noise ratio, channel transmission delay, and channel reflection points.

13. A system for determining characters of channels, comprising:
a Central Office device used for acquiring parameters of an uplink channel;
a CPE used for acquiring parameters of a downlink channel;
an analyzing unit used for determining the characters of the channel based on the parameters of the uplink channel acquired by the Central Office device and the parameters of the downlink channel acquired by the CPE.

14. The system according to Claim 13, wherein the Central Office device comprises the first transmitting/receiving unit and a uplink channel parameters collecting unit, and the CPE comprises the second transmitting/receiving unit and a downlink channel parameters collecting unit;
the first transmitting/receiving unit is used for transmitting a test signal in the downlink channel, and receiving a test signal in the uplink channel and transmitting the received test signal to the uplink channel parameters collecting unit upon performing A/D transform to the received test signal;
the uplink channel parameters collecting unit is used for acquiring parameters of the uplink channel from the received A/D transformed signal;
the second transmitting/receiving unit is used for transmitting a test signal on the uplink channel, and receiving a test signal in the downlink channel and transmitting the received test signal to the downlink channel parameters collecting unit upon performing A/D transform to the received test signal;
the downlink channel parameters collecting unit is used for acquiring parameters of the downlink channel from the received A/D transformed signal.

15. The system according to Claim 14, wherein the analyzing unit comprises: an uplink analyzing unit located in the Central Office, and a downlink analyzing unit located in the CPE;
the uplink analyzing unit is used for determining characters of the uplink channel based on the parameters of the uplink channel acquired by the uplink channel parameters collecting unit and a predefined channel model;
the downlink analyzing unit is used for determining characters of the downlink channel based on the parameters of the downlink channel acquired by the downlink channel parameters collecting unit and the predefined channel model;
and, the uplink analyzing unit transmits the determined information of the characters of the uplink channel to the downlink analyzing unit by the first transmitting/receiving unit and the second transmitting/receiving unit, then, the downlink analyzing unit determines characters of the channel between the Central Office device and the CPE according to the received characters of the uplink channel, the determined characters of the downlink channel and the predefined channel model; or, the downlink analyzing unit transmits the determined information of the characters of the downlink channel to the uplink analyzing unit by the second transmitting/receiving unit and the first transmitting/receiving unit, then, the uplink analyzing unit determines characters of the channel between the Central Office device and the CPE according to the received characters of the downlink channel, the determined characters of the uplink channel and the predefined channel model.

16. The system according to Claim 14, wherein the analyzing unit is located in the Central Office device,
the second transmitting/receiving unit is used for transmitting the parameters of the downlink channel acquired by the downlink channel parameters collecting unit to the first transmitting/receiving unit;
the first transmitting/receiving unit is used for transmitting the received parameters of the downlink channel to the analyzing unit;
the analyzing unit is used for determining the characters of the channel between the Central Office device and the CPE based on the parameters of the uplink channel acquired by the uplink channel parameters collecting unit, the received parameters of the downlink channel and the predefined channel model.

17. The system according to Claim 14, wherein the analyzing unit is located in the CPE,
the first transmitting/receiving unit is used for transmitting the parameters of the uplink channel acquired by the uplink channel parameters collecting unit to the second transmitting/receiving unit;
the second transmitting/receiving unit is used for transmitting the received parameters of the uplink channel to the analyzing unit;
the analyzing unit is used for determining the characters of the channel between the Central Office device and the CPE based on the parameters of the downlink channel acquired by the downlink channel parameters collecting unit, the received parameters of the uplink channel and the predefined channel model.

18. The system according to any one of Claim 14 to 17, wherein the Central Office device and the CPE further comprise a first storing unit and a second storing unit, respectively; the analyzing unit performs the interaction procedure with the first transmitting/receiving unit, the second transmitting/receiving unit and the channel parameters collecting units through the storing unit.
